# EUROPÄISCHE PATENTSCHRIFT

(11) **EP 2 479 025 B1**
(45) Veröffentlichungstag und Bekanntmachung des Hinweises auf die Patenterteilung: **06.03.2019**
(21) Anmeldenummer: 11152117.5
(22) Anmeldetag: 25.01.2011
(51) Int. Cl.: B32B 27/32

(54) **ETIKETTENFOLIE**
STICKER FILM
FILM À ÉTIQUETTES

(43) Veröffentlichungstag der Anmeldung: 25.07.2012
(73) Patentinhaber: Mondi Gronau GmbH, 48599 Gronau (DE)
(72) Erfinder: Niepelt, Ralf, 48599 Gronau (DE); Rudolph, Sven, 06258 Schkopau (DE); Bader, Herbert, 48356 Nordwalde (DE); Konermann, Karl-Heinz, 48599 Gronau (DE); Kukertz, Christian, 57462 Olpe (DE)
(74) Vertreter: Lorenz, Bernd Ingo Thaddeus

(56) Entgegenhaltungen:
- EP-A1- 1 543 955

## Beschreibung

Die Erfindung betrifft eine Etikettenfolie, die durch Coextrusion gebildet ist und an einer ersten Seite eine die Oberfläche bildende Schicht aus Polyethylen mit einem Anteil von zumindest 70 Gew.-%, bevorzugt zumindest 85 Gew.-% Polyethylen hoher Dichte aufweist, wobei die Foliendicke weniger als 75 µm beträgt. Die Erfindung bezieht sich insbesondere auch auf mehrschichtig coextrudierte Folien, wobei dann die an der ersten Seite die Oberfläche bildende Schicht eine Deckschicht darstellt. Bei einer mehrschichtigen Ausgestaltung liegen üblicherweise zumindest zwei außen liegende Deckschichten mit einer dazwischen angeordneten Kernschicht vor.

Etikettenfolien werden üblicherweise an einer ihrer Seiten mit einem Klebstoff versehen und zunächst zusammen mit einem die Schicht aus Klebstoff abdeckenden Träger als Etikettenfolienlaminat bereitgehalten. Aus dem Material der Etikettenfolie werden Etiketten herausgestanzt, so dass diese nach dem Abziehen des Trägers einzeln appliziert werden können.

Die vorliegende Erfindung bezieht sich insbesondere auf eine Etikettenfolie, die für eine Verarbeitung in einer üblichen Etikettiervorrichtung geeignet ist, wobei die Trennung der Etikettenfolie von dem Träger durch ein Abwinkeln und eine anschließende Abziehbewegung des Trägers erfolgt. Zu diesem Zweck muss die Etikettenfolie eine ausreichende Biegesteifigkeit aufweisen, wobei gleichzeitig aus Kostengründen sowohl eine geringe Foliendicke als auch der Einsatz möglichst kostengünstiger Rohstoffe angestrebt werden. Ferner muss die Etikettenfolie gute Stanzeigenschaften aufweisen und auch bedruckbar sein. Insbesondere bei höherwertigen Produkten soll die Etikettenfolie auch ein hochwertiges Aussehen aufweisen und einen Aufdruck gut zur Geltung bringen. Neben einer ausreichend hohen Biegefestigkeit werden auch eine hohe Reißfestigkeit und eine in verschiedenen Richtungen/Produktionsrichtung MD und Querrichtung CD ausgeglichene Weiterreißfestigkeit angestrebt, um eine möglichst große Widerstandsfähigkeit und gute Handhabbarkeit von Etiketten, die aus der Etikettenfolie gebildet sind, zu erreichen.

Abhängig von dem mit dem Etikett versehenen Produkt oder der mit dem Etikett versehenen Produktverpackung kann eine matt oder glänzende Oberfläche von Vorteil sein. In vielen Anwendungsfällen wird gewünscht, dass das Etikett selbst nicht oder nur kaum sichtbar ist, wobei dann in dem nicht bedruckten Bereich das Produkt oder gegebenenfalls die Produktverpackung sichtbar ist, falls diese nicht selbst durchsichtig ist. Auch genießen glänzende Oberflächen insgesamt eine höhere Beliebtheit als matte Oberflächen.

Eine Etikettenfolie mit den eingangs beschriebenen Merkmalen ist aus der EP 1 543 955 B1 bekannt. Bei der vollständig aus Polyethylen bestehenden Etikettenfolie kann eine Reduzierung der Gesamtdicke dadurch erreicht werden, dass zwischen zwei äußeren Deckschichten Schichten aus einem Polyethylen hoher Dichte mit einer Dichte von mehr als 0,945 g/cm³ eine Kernschicht aus einem Polyethylen niedriger Dichte mit einer Dichte von weniger als 0,945 g/cm³ vorgesehen ist, wobei die äußeren Schichten eine Schichtdicke von mindestens 15 µm aufweisen. Die beschriebene Ausgestaltung beruht auf der Erkenntnis, dass Polyethylen hoher Dichte gegenüber Polyethylen niedriger Dichte steifer ist, wobei die Verwendung eines steifen Materials in den äußeren Zonen einen größeren Einfluss auf die Biegesteifigkeit der Etikettenfolie hat. Bei einem Biegen der Folie werden nämlich die Außenseiten stärker gedehnt oder gestaucht, während die Verformung um eine mittige neutrale Faser vergleichsweise gering ist. Die aus der EP 1 543 955 B1 bekannte Etikettenfolie zeichnet sich durch gute mechanische Eigenschaften bei einer geringen Gesamtdicke aus. Allerdings konnten in der Praxis die bei herkömmlichen Etikettenfolien bekannten optischen Eigenschaften, insbesondere ein hoher Glanz und eine geringe Trübung, nicht erreicht werden, so dass das Einsatzgebiet der in der EP 1 543 955 B1 beschriebenen Etikettenfolie entsprechend begrenzt ist.

Aus der WO 2009/010079 A1 ist eine Etikettenfolie mit reduzierter Dicke bekannt, die durch Coextrusion hergestellt ist. Bei einer Anordnung mit zwei Deckschichten weist die dazwischen angeordnete Kernschicht zumindest 50 % Polypropylen auf, wodurch bei einer Dicke von weniger als 80 µm eine ausreichende Biegesteifigkeit erreicht wird, um die Etikettenfolie in einer üblichen Etikettiervorrichtung verarbeiten zu können. Als Deckschichten werden verschiedene Polyethylentypen und Polymermischungen mit Styrol-Butadien-Styrol-Copolymer vorgeschlagen. Die gemäß der WO 2009/010079 A1 vorgesehene Ausgestaltung der Kernschicht mit zumindest 50 % Polypropylen führt dazu, dass die gesamte Etikettenfolie aufgrund der erhöhten Festigkeit des Polypropylens schlechter stanzbar ist. Zusätzlich ergeben sich auch erhebliche Nachteile im Hinblick auf den Extrusionsprozess, da aufgrund des höheren Schmelzpunktes von Polypropylen eine höhere Verarbeitungstemperatur und entsprechend auch ein größerer Wärmeeintrag erforderlich sind. Zusätzlich zu dem höheren Energiebedarf aufgrund der erhöhten Schmelz- und Extrusionstemperatur ist entsprechend auch eine längere Abkühlzeit bei der Extrusion zu berücksichtigen, welche sich insbesondere bei der Blasfolienextrusion negativ auswirkt, bei der die extrudierte Folie zunächst als eine Art Blase vorliegt. Schließlich wird die Prozesssteuerung und der apparative Aufwand bei Materialien unterschiedlicher Schmelztemperaturen wie PE und PP maßgeblich erhöht. Eine weitere Etikettenfolie mit Außenschichten aus Polyethylen und einer Kernschicht aus Polypropylen ist aus DE 198 59 789 C1 bekannt, wobei auch hier die zuvor beschriebenen Nachteile vorliegen.

In der Praxis werden hauptsächlich mehrschichtige Etikettenfolien eingesetzt, die eine Dicke zwischen 80 µm und 90 µm aufweisen, wobei die einzelnen Schichten jeweils aus einem Blend von Polyethylen niedriger Dichte (LDPE) und Polyethylen hoher Dichte (HDPE) gebildet sind. Hauptbestandteil der einzelnen Schichten ist dabei LDPE, wobei HDPE üblicherweise mit einem Anteil von weniger als 30 Gew.-% beigemischt ist. Der prozentuale Anteil von HDPE variierten in Abhängigkeit der gewünschten optischen Eigenschaften, wobei durch einen gegenüber der Kernschicht reduzierten Anteile von HDPE in den Deckschichten der Glanz und die Transparenz der Etikettenfolie verbessert werden. Die beschriebenen Standardetikettenfolien zeichnen sich durch gute optische Eigenschaften, einfache Stanzbarkeit, gute mechanische Eigenschaften sowie eine gute Bedruckbarkeit aus. Aus Kostengründen werden derartige Standardetikettenfolien in der Regel als Blasfolien hergestellt.

Vor diesem Hintergrund liegt der Erfindung die Aufgabe zugrunde eine Etikettenfolie anzugeben, die leicht zu fertigen ist und eine vergleichsweise geringe Foliendicke aufweist, ohne dass dadurch die mechanischen Eigenschaften oder das optische Erscheinungsbild beeinträchtigt werden.

Gegenstand der Erfindung und Lösung der Aufgabe ist eine Etikettenfolie gemäß Patentanspruch 1. Die besagte erste Seite liegt bei den aus den Etikettenfolien gebildeten und auf einen Gegenstand applizierten Etiketten frei, während das Etikett an der gegenüberliegenden zweiten Seite der Etikettenfolie auf den zu kennzeichnenden Gegenstand, vorzugsweise mittels einer Klebstoffschicht, aufgebracht ist.

Gemäß einem weiteren Aspekt der vorliegenden Erfindung beträgt die nach ASTM D 1003 ("Standard Test Method for Haze and Luminous Transmittance of Transparent Plastics") bestimmte Trübung ausgehend von einer durch Coextrusion hergestellten Etikettenfolie mit den eingangs beschriebenen Merkmalen weniger als 30%, vorzugsweise weniger als 25%, besonders bevorzugt weniger als 23%.

Die an der ersten Seite die Oberfläche bildende Schicht zeichnet sich durch einen hohen Glanz aus, wozu die entsprechende Schicht aus einem mit Metallocen-Katalysatoren hergestellten Polyethylen hoher Dichte (mHDPE) gebildet ist. Zusätzlich oder alternativ weist die Folie insgesamt eine geringe Trübung auf, was auch durch den Einsatz von mHDPE erreicht werden kann. Die vorliegende Erfindung beruht auf der Erkenntnis, dass die Metallocen-Technologie zu einem sehr gut steuerbaren und gleichmäßigen Molekülaufbau führt, so dass neben einer vergleichsweise engen und einstellbaren Molmassenverteilung auch eine Variation der Art und der Länge der bei der Polymerisation eingebauten Comonomere gezielt zur Einstellung gewünschter Produkteigenschaften, insbesondere guter optischer Eigenschaften genutzt werden kann. So ermöglicht es die Verwendung von geeigneten, mit Metallocen-Katalysatoren hergestellten Polyethylen hoher Dichte überraschenderweise den Reflektometerwert auf die erfindungsgemäßen Parameter einzustellen. Bei der Verwendung üblicher, herkömmlicher Polyethylene hoher Dichte sind die optischen Eigenschaften deutlich schlechter, insbesondere der Glanz viel geringer. Des Weiteren ist eine deutliche Trübung wahrnehmbar. Die aus dem Stand der Technik bekannten Etikettenfolien mit Deckschichten aus einem Polyethylen hoher Dichte werden deshalb gesteigerten Qualitätsanforderungen nicht gerecht.

Ein im Rahmen der Erfindung geeignetes mit Metallocen-Katalysatoren hergestelltes Polyethylen hoher Dichte (mHDPE) ist beispielsweise Lumicene® mHDPE M 5712 von TOTAL Petrochemicals. Bevorzugt besteht die an der ersten Seite die Oberfläche bildende Schicht vollständig aus Polyethylen hoher Dichte, also insbesondere mHDPE. Bei einer mehrschichtigen Ausgestaltung können auch beide Deckschichten vollständig aus Polyethylen hoher Dichte, also insbesondere mHDPE bestehen.

Bei den aus der Praxis bekannten Etikettenfolien mit einer Außenschicht, die Polyethylen hoher Dichte aufweist, wird sowohl bei der Herstellung als auch bei der weiteren Verarbeitung und Bedruckung der Etikettenfolie eine erhebliche Bildung von Staub beobachtet. Der Staub führt nicht nur zu Verschmutzungen der eingesetzten Maschinen im Produktions- und Verarbeitungsbereich, sondern verschlechtert auch wesentlich die Eigenschaften der Folie. Es besteht die Gefahr, dass die Oberfläche der Folie derart verschmutzt wird, dass eine Bedruckung oder eine Coronabehandlung nicht ohne Weiteres möglich sind. Eine mechanische Entfernung des Staubs wird üblicherweise nicht vorgenommen, weil dadurch Kratzer entstehen könnten, die im Bereich von Etikettenfolien nicht zu akzeptieren sind. Üblicherweise wird der Staub in einer Primerschicht gebunden, auf die dann später eine Bedruckung erfolgt.

Wenn erfindungsgemäß mHDPE eingesetzt wird, ergibt sich überraschenderweise der Effekt, dass die Bildung von Staub sehr deutlich reduziert oder sogar nahezu unterbunden wird. Dieser überraschende Effekt kann darauf zurückgeführt werden, dass mHDPE eine höhere Reinheit und entsprechend weniger niedermolekulare Bestandteile aufweist. Im Rahmen der Erfindung kann aus mehreren Gründen auf einen Primer verzichtet werden. Einerseits besteht bei der Verwendung von mHDPE nicht das zuvor beschriebene Problem mit Staub. Andererseits weist die Etikettenfolie bereits sehr gute optische Eigenschaften auf und kann auch vergleichsweise gut bedruckt werden. Durch den Wegfall einer separaten Primerschicht ergeben sich erhebliche Kostenersparnisse, weil sowohl ein zusätzlicher Bearbeitungsschritt als auch die Kosten für den Primer selbst wegfallen. Mit der erfindungsgemäßen Etikettenfolie können also Etiketten gebildet werden, die ohne eine separate Primerschicht direkt bedruckt sind. Die Anordnung einer Primerschicht ist aber im Rahmen der Erfindung weiterhin möglich, falls dies im Einzelfall gewünscht wird.

Wenn lediglich ein hoher Glanz gewünscht ist, kann die Etikettenfolie ohne Einschränkung mit Pigmenten, beispielsweise Titandioxid als Weißpigment eingefärbt sein. Bevorzugt ist jedoch eine Ausgestaltung, bei der die Etikettenfolie durchsichtig ist, wobei dann eine geringe Trübung der Etikettenfolie angestrebt wird, damit diese weitgehend unsichtbar ist. Auch eine geringe Trübung von weniger als 30%, vorzugsweise weniger als 25% ist gemäß dem Stand der Technik bei Etikettenfolien mit einer Deckschicht aus einem Polyethylen hoher Dichte ohne Beispiel, wobei sich auch die im Rahmen der Erfindung auf Werte von weniger als 75 µm beschränkte Foliendicke vorteilhaft auswirkt.

Die Etikettenfolie muss, wie eingangs erläutert, auch eine ausreichende Biegesteifigkeit aufweisen, um in üblichen Etikettiervorrichtungen verarbeitet werden zu können. Vorteilhaft ist in diesem Zusammenhang, dass bei einer mehrschichtigen Ausgestaltung die Deckschichten, welche aufgrund der Geometrie bei einer Biegung einen größeren Beitrag zu der Biegesteifigkeit leisten, steifer sind als das Material der Kernschicht. So ist im Rahmen der Erfindung eine Foliendicke zwischen 62 µm und 71 µm bevorzugt, um einerseits den üblichen mechanischen Anforderungen gerecht zu werden und andererseits die Gestehungskosten so gering wie möglich zu halten.

Erfindungsgemäß weist die Etikettenfolie an zumindest ihrer ersten Seite einen nach den DIN 67 530 bestimmten 60°-Reflektometerwert von größer als 65, vorzugsweise größer als 75 auf. Die Erfindung umfasst damit grundsätzlich auch extrudierte Monofolien aus einem geeigneten Material sowie zumindest zweischichtige coextrudierte Etikettenfolien, die auch einen asymmetrischen Aufbau aufweisen können.

Gemäß einer bevorzugten Ausgestaltung der Erfindung ist die Etikettenfolie aber durch Coextrusion mit außen liegenden Deckschichten aus Polyethylen und einer innen liegenden Kernschicht aus Polyethylen gebildet, wobei beide Deckschichten zu zumindest 85 Gew.-% aus Polyethylen hoher Dichte bestehen. Im Rahmen einer solchen bevorzugten Ausgestaltung bildet eine der Deckschichten an der ersten Seite der Etikettenfolie die entsprechende Oberfläche.

Da sowohl die Deckschichten als auch die Kernschicht aus Polyethylen bestehen, ist in der Regel eine hohe Verbundfestigkeit zwischen den Schichten gewährleistet, so dass auf zusätzliche Haftvermittlerschichten verzichtet werden kann. Es ergibt sich dann ein einfacher dreischichtiger Aufbau, wobei die beiden Deckschichten bevorzugt auch gleich ausgebildet sein können. Mehr als drei Schichten können beispielsweise dann vorgesehen werden, wenn aus Kostengründen die Dicke der außenliegenden Deckschichten aus einem hochwertigen Material reduziert werden soll. So ist es beispielsweise denkbar unterhalb der Deckschichten aus einem hochwertigen, die optischen Eigenschaften maßgeblich bestimmenden Material eine zusätzliche Schicht aus einem kostengünstigeren Material vorzusehen.

Die Dicke der beiden Deckschichten zusammen beträgt bevorzugt mindestens 50% der gesamten Foliendicke.

Um eine Foliendicke von weniger als 75 µm und bevorzugt eine Foliendicke zwischen 62 µm und 71 µm zu erreichen, weisen sowohl die beiden Deckschichten als die Kernschicht gemäß einer bevorzugten Ausgestaltung der Erfindung jeweils eine Dicke zwischen 20 µm und 25 µm auf, so dass die Dicke der einzelnen Schichten in etwa die Gleiche ist, wobei sich entsprechend ein Dickenverhältnis von etwa 1:1:1 ergibt. Ein Dickenverhältnis von etwa 1 : 1 : 1 liegt insbesondere dann vor, wenn die Kernschicht eine Dicke zwischen 80 % bis 120 % der Dicke der Deckschichten aufweist.

Die einzelnen Schichten der Etikettenfolie können in üblicher Weise Additive und Zuschlagstoffe enthalten, die in der Regel einen Gewichtsanteil von weniger als 15 %, vorzugsweise weniger als 5 % aufweisen. Die Etikettenfolie besteht darüber hinausgehend vollständig aus Polyethylen und kann damit auch besonders gut hergestellt und recycelt werden. Insbesondere weist Polyethylen allgemein eine vergleichsweise niedrige Schmelz- und Verarbeitungstemperatur auf, so dass der für die Herstellung notwendige Energieeintrag vergleichsweise gering ist. Als weiterer Vorteil ergibt sich, dass für sämtliche die Etikettenfolie bildende Polyethylene eine schnelle Abkühlung unter den Schmelzpunkt erfolgt, so dass eine problemlose Coextrusion ermöglicht wird. So zeichnet sich mHDPE bei der Extrusion, insbesondere der Blasfolienextrusion, durch eine hohe Schmelzestabilität aus, wobei die bei der Blasfolienextrusion unterhalb des Extrusionskopfes gebildete Blase durch die schnelle Abkühlung des gesamten Polymers unter den Schmelzpunkt unmittelbar stabilisiert wird. Auch das bevorzugte Dickenverhältnis der Schichten von 1 : 1 : 1 erlaubt eine besonders einfache Verfahrensführung, da für sämtliche Schichten in etwa der gleiche Materialfluss eingestellt werden kann.

Im Rahmen der Erfindung weist die innen liegende Kernschicht aus Polyethylen bevorzugt eine Dichte von weniger als 0,945 g/cm³ auf. Besonders bevorzugt ist eine Dichte zwischen 0,925 g/cm³ und 0,935 g/cm³, wobei dieser Wertebereich gemäß der üblichen Einteilung an der Grenze zwischen Polyethylen niedriger Dichte und Polyethylen mittlerer Dichte liegt. Die Unterscheidung ist in diesem Zusammenhang in der Praxis nicht scharf, wobei neben dem reinen Volumengewicht auch die Struktur der Polymerketten bei der Klassifizierung berücksichtigt wird. So werden beispielsweise auch Polyethylene mit einer Dichte von mehr als 0,93 g/cm³ als LDPE (low density Polyethylen) bezeichnet, wenn eine für Polyethylen niedriger Dichte typische Molekülstruktur vorliegt. Für die Kernschicht können auch lineare Polyethylene niedriger oder mittlerer Dichte eingesetzt werden, die als LLDPE bzw. LMDPE bezeichnet werden. Grundsätzlich kann auch für die Kernschicht ein mit Metallocen-Katalysatoren hergestelltes Polyethylen also ein mLDPE bzw. mMDPE eingesetzt werden. Durch entsprechend hochwertige Polymertypen können die mechanischen Eigenschaften, falls erforderlich, weiter verbessert oder im gewünschten Maße eingestellt werden.

Gegenüber Polypropylen weist Polyethylen, insbesondere auch mHDPE eine deutlich bessere Bedruckbarkeit auf. Die erfindungsgemäße Etikettenfolie ist an einer Seite bedruckt, wobei der Aufdruck entweder an der freiliegenden ersten Seite oder an der mit Klebstoff versehenen zweiten Seite geschützt angebracht werden kann. Aus praktischen Gründen erfolgt die Bedruckung häufig aber erst nach Bildung eines Etikettenfolienlaminates, bei der die Etikettenfolie mit Klebstoff auf einem Träger angeordnet ist. In einem solchen Fall wird stets die freiliegende erste Seite bedruckt. Zumindest die Seite der Etikettenfolie, die mit einem Aufdruck versehen werden soll, kann zur Verbesserung der Bedruckbarkeit einer Oberflächenbehandlung unterzogen werden. In diesem Zusammenhang ergibt sich im Rahmen der Erfindung der Vorteil, dass hierzu in der Regel bereits vergleichsweise einfache Behandlungen wie eine Coronaentladung ausreichend sind, während bei schlechter bedruckbaren Polymertypen aufwendigere, speziellere Techniken wie eine sogenannte Aldyne-Vorbehandlung notwendig sind, bei der durch eine Plasmaentladung eine Oberflächenaktivierung mit stickstoffhaltigen Gruppen erfolgt. An einer Oberfläche der Etikettenfolie kann auch ein Metallisierung aufgebracht sein. Wenn die an der entsprechenden Oberfläche vorgesehene Schicht einen hohen Anteil an mHDPE aufweist oder vollständig aus mHDPE besteht, ergibt sich der Vorteil, dass aufgrund der verbesserten Oberflächenqualität und höheren Reinheit die Aufbringung einer Metallisierung vereinfacht wird, wobei auch eine verbesserte Haftung der Metallisierung erreicht wird.

Durch den Einsatz von mHDPE in den Deckschichten können auch insgesamt bei einer geringen Foliendicke gute mechanische Eigenschaften erreicht werden. So ist die für eine maschinelle Applizierung ausschlaggebende Biegesteifheit deutlich größer als bei bekannten Folien gleicher Dicke, die in den Deckschichten nur geringe Anteile an HDPE aufweisen und ansonsten aus Polyethylen niedriger Dichte (LDPE) oder Polyethylen mittlerer Dichte (MDPE) bestehen. Die erfindungsgemäße Folie zeichnet sich auch durch eine hohe Reißfestigkeit und auch Weiterreißfestigkeit aus, was in der Praxis von besonderer Bedeutung ist. So werden häufig die bei dem Stanzen um die einzelnen Etiketten herum gebildeten Stege und Gitter vor einer automatischen Applikation der Etiketten abgezogen. Damit dies möglichst einfach erfolgen kann, sollen die zum Teil sehr dünnen gitterförmig zusammenhängenden Stege auch bei der Ausübung der erforderlichen Zugkräfte nicht zerreißen, wobei sowohl in Produktionsrichtung der Folie (MD) sowie quer dazu erhebliche Zugkräfte auftreten können. Schließlich wird bei den erfindungsgemäßen Etikettenfolien ein verbessertes Stanzverhalten beobachtet, was auf eine insgesamt reduzierte Richtungsabhängigkeit der Eigenschaften, also kleinere Unterschiede zwischen den Eigenschaften in Produktionsrichtung der Folie (MD) sowie quer dazu (CD) zurückzuführen ist.

Um eine einfache Handhabung der Etikettenfolie und insbesondere ein gutes Abgittern der Reste zwischen einzelnen ausgestanzten Folien zu ermöglichen, soll die Folie insbesondere ausgeglichene Dehnungseigenschaften aufweisen. Zumindest gemäß einer bevorzugten Ausgestaltung der Erfindung ist vorgesehen, dass die Bruchdehnung (elongation at break) sowohl in Produktionsrichtung MD als auch in Querrichtung CD zumindest 400 %, vorzugsweise zumindest 500 % beträgt. Als Obergrenze für die Dehnung soll möglichst auch ein Wert von etwa 1000 % nicht überschritten werden. Bei einem zu großen Wert der Bruchdehnung ergibt sich nämlich eine Folie die insgesamt zäh ist und sich so unter Umständen bei der Anwendung von Zug in ungewünschter Weise verformen kann. Die beschriebenen ausgeglichenen Dehnungseigenschaften können durch den zuvor als bevorzugt beschriebenen Einsatz von mHDPE in der Deckschicht bzw. einer oberflächenbildende Schicht erreicht werden. Im Gegensatz dazu weisen einfache Typen von HDPE ein äußerst geringes Dehnvermögen in Querrichtung von üblicherweise unter 100 % auf.

Wie eingangs erläutert, werden in der Praxis hauptsächlich mehrschichtige Etikettenfolien eingesetzt, die eine Dicke zwischen 80 µm und 90 µm aufweisen, wobei die einzelnen Schichten jeweils aus einem Blend von LDPE und HDPE gebildet sind. Hauptbestandteil der einzelnen Schichten ist LDPE, wobei der Anteil von HDPE üblicherweise unter 30 % liegt und zur Verbesserung der optischen Eigenschaften in den Deckschichten noch weiter reduziert ist. Derartige Etikettenfolien stellen hinsichtlich ihrer mechanischen und optischen Eigenschaften eine Referenz dar, weil derartige Etikettenfolien nicht nur ein hochwertiges Aussehen aufweisen, sondern auch besonders gut gehandhabt werden können. Wichtige Parameter sind dabei die Stanzbarkeit, die Weiterreißfestigkeit, sowie die Dehnbarkeit der Folie. Mit der erfindungsgemäßen Etikettenfolie können überraschenderweise bei einer reduzierten Gesamtdicke nicht nur die optischen Eigenschaften, sondern auch die mechanischen Eigenschaften der standardmäßig eingesetzten Polyethylen-Folie erreicht werden, wobei sich durch die Dickenreduzierung Materialkosten einsparen lassen.

Wenn gemäß einer besonders bevorzugten Ausgestaltung mHDPE in den Deckschichten vorgesehen ist, werden etwas höhere Rohstoffkosten durch die beschriebene Materialersparnis mehr als ausgeglichen.

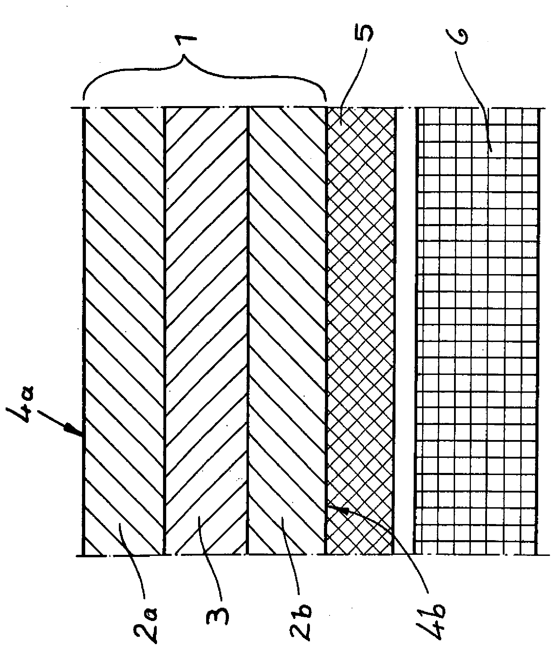

Die Erfindung wird im Folgenden anhand einer lediglich ein Ausführungsbeispiel darstellenden Zeichnung erläutert. Die einzige Figur zeigt ein Etikettenfolienlaminat in einer Schnittdarstellung.

Die einzige Figur zeigt ein Etikettenfolienlaminat mit einer Etikettenfolie 1, die außen liegende Deckschichten 2a, 2b und eine innen liegende Kernschicht 3 aus Polyethylen einer Dichte von weniger als 0,945 g/cm³ aufweist. An der von einer der Deckschichten 2a gebildeten ersten Seiten 4a ist ein Aufdruck vorgesehen, der bevorzugt nach einer Oberflächenbehandlung mittels einer Coronaentladung aufgebracht wird. An der gegenüberliegenden zweiten Seite 4b der Etikettenfolie 1 ist eine Schicht aus Klebstoff 5 vorgesehen, die von einem abziehbaren Träger 6 geschützt ist.

Aus dem dargestellten Etikettenfolienlaminat können einzelne Folienetiketten ausgestanzt werden, wobei die Stanzung zweckmäßigerweise so erfolgt, dass nur die Deckschichten 2a, 2b und die Kernschicht 3 der Etikettenfolie 1, aber nicht der darunter angeordnete Träger 6 durchtrennt werden. Wenn der Träger 6 dann zur Seite weggezogen wird, erfolgt eine Trennung von der Schicht aus Klebstoff 5, weil die Etikettenfolie 1 eine hohe Steifigkeit aufweist und so der Abwinklung des Trägers 6 nicht folgen kann. Die Applizierung einzelner Etiketten kann damit in einer üblichen Etikettiervorrichtung erfolgen.

Die Etikettenfolie weist einen dreischichtigen, symmetrischen Aufbau auf, wobei die beiden Deckschichten 2a, 2b aus einem mit Metallocen-Katalysatoren hergestellten Polyethylen hoher Dichte (mHDPE) gebildet sind. Geeignet ist beispielsweise das Polymer mit dem Handelsnamen Lumicene® M 5712 von TOTAL Petrochemicals. Die Kernschicht besteht aus einem Polyethylen niedriger oder mittlerer Dichte.

Die Deckschichten 2a, 2b und die Kernschicht 3 weisen eine in etwa gleiche Dicke von jeweils zwischen 20 µm und 25 µm auf, so dass sich eine gesamte Foliendicke von weniger als 80 µm, vorzugsweise zwischen 62 µm und 71 µm ergibt.

## Patentansprüche

1. Etikettenfolie (1), die durch Extrusion gebildet ist und an einer ersten Seite (4a) eine die Oberfläche bildende Schicht (2a) aus Polyethylen mit einem Anteil von zumindest 70 Gew.-%, bevorzugt zumindest 85 Gew.-% Polyethylen hoher Dichte aufweist, wobei die Foliendicke weniger als 75 µm beträgt, **dadurch gekennzeichnet, dass** das in der eine Oberfläche bildenden Schicht (2a) zu zumindest 70 Gew.-%, bevorzugt zumindest 85 Gew.-% enthaltene Polyethylen hoher Dichte ein mit Metallocen-Katalysatoren hergestelltes Polyethylen hoher Dichte (mHDPE) ist und dass an zumindest der ersten Seite (4a) der Etikettenfolie (1) der nach DIN 67 530 bestimmte 60°-Reflektometerwert größer als 65, vorzugsweise größer als 75 ist.

2. Etikettenfolie nach dem Oberbegriff des Anspruchs 1, **dadurch gekennzeichnet, dass** die nach ASTM D 1003 bestimmte Trübung weniger als 30 % beträgt.

3. Etikettenfolie (1) nach Anspruch 1 oder 2, **dadurch gekennzeichnet, dass** die gesamte Foliendicke zwischen 62 µm und 71 µm beträgt.

4. Etikettenfolie (1) nach einem der Ansprüche 1 bis 3, **dadurch gekennzeichnet, dass** diese, abgesehen von üblichen Additiven und Zuschlagstoffen mit einem Gewichtsanteil von weniger als 15 %, vollständig aus Polyethylen besteht.

5. Etikettenfolie (1) nach einem der Ansprüche 1 bis 4, **dadurch gekennzeichnet, dass** die an der ersten Seite (4a) die Oberfläche bildende Schicht (2a) durch eine Coronaentladung vorbehandelt ist.

6. Etikettenfolie (1) nach einem der Ansprüche 1 bis 5, **dadurch gekennzeichnet, dass** diese durch Blasfoliencoextrusion gebildet ist.

7. Etikettenfolie (1) nach einem der Ansprüche 1 bis 6, **dadurch gekennzeichnet, dass** an einer Oberfläche eine Metallisierung aufgebracht ist.

8. Etikettenfolie (1) nach einem der Ansprüche 1 bis 7, **dadurch gekennzeichnet, dass** die Etikettenfolie (1) durch Coextrusion mit außen liegenden Deckschichten (2a, 2b) aus Polyethylen und einer innenliegenden Kernschicht (3) aus Polyethylen gebildet ist, wobei beide Deckschichten (2a, 2b) zu zumindest 70 % bevorzugt zumindest 85 Gew.-% aus Polyethylen hoher Dichte bestehen.

9. Etikettenfolie nach Anspruch 8, **dadurch gekennzeichnet, dass** die Deckschichten (2a, 2b) vollständig aus Polyethylen hoher Dichte bestehen.

10. Etikettenfolie nach Anspruch 8 oder 9, **dadurch gekennzeichnet, dass** die innen liegende Kernschicht (3) aus Polyethylen einer Dichte von weniger als 0,945 g/cm³ gebildet ist.

11. Etikettenfolie (1) nach Anspruch 10, **dadurch gekennzeichnet, dass** die innen liegenden Kernschicht (3) aus Polyethylen einer Dichte zwischen 0,925 g/cm³ und 0,935 g/cm³ gebildet ist.

12. Etikettenfolie (1) nach einem der Ansprüche 8 bis 11, **dadurch gekennzeichnet, dass** die Deckschichten (2a, 2b) gleich ausgebildet sind und unmittelbar an die Kernschicht (3) angrenzen.

13. Etikettenfolie (1) nach einem der Ansprüche 8 bis 12, **dadurch gekennzeichnet, dass** die Dicke der beiden Deckschichten (2a, 2b) zusammen mindestens 50% der gesamten Foliendicke beträgt.

14. Etikettenfolie (1) nach einem der Ansprüche 8 bis 13, **dadurch gekennzeichnet, dass** die Deckschichten (2a, 2b) und die Kernschicht (3) jeweils eine Dicke zwischen 20 µm und 25 µm aufweisen.

15. Etikettenfolie (1) nach einem der Ansprüche 8 bis 14, **dadurch gekennzeichnet, dass** die Deckschichten (2a, 2b) und die Kernschicht (3) ein Dickenverhältnis von etwa 1:1:1 aufweisen.

16. Etikettenfolie (1) nach einem der Ansprüche 1 bis 15, **dadurch gekennzeichnet, dass** die Bruchdehnung sowohl in Produktionsrichtung als auch in Querrichtung zumindest 400 %, vorzugsweise zumindest 500 % beträgt.

## Claims

1. A label film (1) formed by means of extrusion and comprising, on a first side (4a), a surface-forming layer (2a) of polyethylene of which at least 70% by weight, preferably 85% by weight is high-density polyethylene, wherein the film thickness is less than 75 µm, **characterised in that** the polyethylene in the surface-forming layer (2a) of which at least 70% by weight, preferably 85% by weight is high-density polyethylene, is a high-density polyethylene (mHDPE) manufactured with metallocene catalysers and **in that** on at least the first side (4a) of the label film (1) the 60° reflectometer value determined according to DIN 67 530 is greater than 65, preferably greater than 75.

2. The label film according to the preamble of claim 1, **characterised in that** the cloudiness determined according to ASTM D 1003 is less than 30%.

3. The label film (1) according to the preamble of claim 1 or 2, **characterised in that** the total film thickness lies between 62 µm and 71 µm.

4. The label film (1) according to one of claims 1 to 3, **characterised in that** the label film, apart from the usual additives and aggregates with a weight percentage of less than 15%, consists entirely of polyethylene.

5. The label film (1) according to one of claims 1 to 4, **characterised in that** the surface-forming layer (2a) on the first side (4a) is pre-treated with a corona discharge.

6. The label film (1) according to one of claims 1 to 5, **characterised in that** the label film is formed by blow film co-extrusion.

7. The label film (1) according to one of claims 1 to 6, **characterised in that** a metallisation is applied to one surface.

8. The label film (1) according to one of claims 1 to 7, **characterised in that** the label film (1) is formed by co-extrusion with external cover layers (2a, 2b) from polyethylene and an internal core layer (3) from polyethylene, wherein at least 70% by weight, preferably 85% by weight of both cover layers (2a, 2b) consists of high-density polyethylene.

9. The label film according to the preamble of claim 8, **characterised in that** the cover layers (2a, 2b) consist entirely of high-density polyethylene.

10. The label film according to the preamble of claim 8 or 9, **characterised in that** the internal core layer (3) is formed from high-density polyethylene of less than 0.945g/cm³.

11. The label film (1) according to the preamble of claim 10, **characterised in that** the internal core layer (3) is formed from high-density polyethylene between 0.925g/cm³ and 0.935g/cm³.

12. The label film (1) according to one of claims 8 to 11, **characterised in that** the cover layers (2a, 2b) are formed identically and directly adjoin the core layer (3) .

13. The label film (1) according to one of claims 8 to 12, **characterised in that** the thickness of the two cover layers (2a, 2b) together is at least 50% of the total film thickness.

14. The label film (1) according to one of claims 8 to 13 **characterised in that** the cover layers (2a, 2b) and the core layer (3) each comprise a thickness of between 20 µm and 25 µm.

15. The label film (1) according to one of claims 8 to 14, **characterised in that** the cover layers (2a, 2b) and the core layer (3) comprise a thickness ratio of approx. 1:1:1.

16. The label film (1) according to one of claims 8 to 15, **characterised in that** the elongation at break, both in production direction and transverse direction, is at least 400%, preferably at least 500%.

## Revendications

1. Film pour étiquettes (1) qui est créé par extrusion et qui sur une première face (4a) comporte une couche (2a) formant la surface en polyéthylène, avec une part d'au moins 70 % en poids, de préférence d'au moins 85 % en poids de polyéthylène de haute densité, l'épaisseur du film s'élevant à moins de 75 µm, **caractérisé en ce que** le polyéthylène de haute densité contenu à raison d'au moins 70 % en poids, de préférence à raison d'au moins 85 % en poids dans la couche (2a) formant une surface est un polyéthylène de haute densité fabriqué avec des catalyseurs métallocènes (mHDPE) et **en ce qu'**au moins sur la première face (4a) du film pour étiquette (1), la valeur réflectométrique à 60°, déterminée selon la norme DIN 67 530 est supérieure à 65, de préférence supérieure à 75.

2. Film pour étiquettes selon le préambule de la revendication 1, **caractérisé en ce que** la turbidité déterminée selon la norme ASTM D 1003 s'élève à moins de 30 %.

3. Film pour étiquettes (1) selon la revendication 1 ou 2, **caractérisé en ce que** l'épaisseur totale du film s'élève à de 62 µm à 71 µm.

4. Film pour étiquettes (1) selon l'une quelconque des revendications 1 à 3, **caractérisé en ce que**, nonobstant les additifs et adjuvants habituels à raison d'une part en poids de moins de 15 %, celui-ci est totalement constitué de polyéthylène.

5. Film pour étiquettes (1) selon l'une quelconque des revendications 1 à 4, **caractérisé en ce que** la première couche (2a) formant la surface sur la première face (4a) est prétraitée par décharge Corona.

6. Film pour étiquettes (1) selon l'une quelconque des revendications 1 à 5, **caractérisé en ce que** celui-ci est totalement créé par extrusion de film par soufflage.

7. Film pour étiquettes (1) selon l'une quelconque des revendications 1 à 6, **caractérisé en ce que** sur une surface est appliquée une métallisation.

8. Film pour étiquettes (1) selon l'une quelconque des revendications 1 à 7, **caractérisé en ce que** le film pour étiquettes (1) est créé par coextrusion, avec des couches de couverture (2a, 2b) extérieures en polyéthylène et une couche d'âme (3) intérieure en polyéthylène, les deux couches de couverture (2a, 2b) étant constituées à raison d'au moins 70 %, de préférence à raison d'au moins 85 % en poids de polyéthylène de haute densité.

9. Film pour étiquettes selon la revendication 8, **caractérisé en ce que** les couches de couverture (2a, 2b) sont totalement constituées de polyéthylène de haute densité.

10. Film pour étiquettes selon la revendication 8 ou 9, **caractérisé en ce que** la couche d'âme (3) intérieure est créée en polyéthylène d'une densité inférieure à 0,945g/cm³.

11. Film pour étiquettes (1) selon la revendication 10, **caractérisé en ce que** la couche d'âme (3) intérieure est créée en polyéthylène d'une densité comprise entre 0,925 g/cm³ et 0,935 g/cm³.

12. Film pour étiquettes (1) selon l'une quelconque des revendications 8 à 11, **caractérisé en ce que** les couches de couverture (2a, 2b) sont conçues à l'identique et jouxtent directement la couche d'âme (3) .

13. Film pour étiquettes (1) selon l'une quelconque des revendications 8 à 12, **caractérisé en ce qu'**ensemble, l'épaisseur des deux couches de couverture (2a, 2b) correspond à au moins 50 % en poids de l'épaisseur totale du film.

14. Film pour étiquettes (1) selon l'une quelconque des revendications 8 à 13, **caractérisé en ce que** les couches de couverture (2a, 2b) et la couche d'âme (3) présentent chacune une épaisseur comprise entre 20 µm et 25 µm.

15. Film pour étiquettes (1) selon l'une quelconque des revendications 8 à 14, **caractérisé en ce que** les couches de couverture (2a, 2b) et la couche d'âme (3) présentent un rapport d'épaisseur d'environ 1 : 1 : 1.

16. Film pour étiquettes (1) selon l'une quelconque des revendications 1 à 15, **caractérisé en ce que** l'allongement à la rupture aussi bien dans la direction de production qu'également dans la direction transversale est d'au moins 400 %, de préférence d'au moins 500 %.
